# EUROPÄISCHE PATENTSCHRIFT

(11) **EP 2 591 906 B1**
(45) Veröffentlichungstag und Bekanntmachung des Hinweises auf die Patenterteilung: **13.08.2014**
(21) Anmeldenummer: 12191873.4
(22) Anmeldetag: 08.11.2012
(51) Int. Cl.: B29C 49/78, B29C 49/36, B29C 49/12, B29D 22/00

(54) **Blasmaschine mit automatischer Prozesswinkeloptimierung**
Blowing machine with automatic process angle optimization
Souffleuse avec optimisation automatique de l'angle de processus

(30) Priorität: 08.11.2011 DE 102011055153
(43) Veröffentlichungstag der Anmeldung: 15.05.2013
(73) Patentinhaber: Krones AG, 93073 Neutraubling (DE)
(72) Erfinder: Asbrand, Helmut, 93073 Neutraubling (DE)
(74) Vertreter: Bittner, Bernhard

(56) Entgegenhaltungen:
- EP-A1- 0 655 314
- WO-A2-2007/077241
- WO-A2-2009/004472
- US-A1- 2006 099 340

## Beschreibung

Die vorliegende Erfindung bezieht sich auf ein Verfahren und eine Vorrichtung zum Umformen von Kunststoffvorformlingen zu Kunststoffbehältnissen. Derartige Maschinen, im Folgenden als Blasmaschinen bezeichnet, sind aus dem Stand der Technik seit langem bekannt. Üblicherweise werden dabei Kunststoffvorformlinge an eine Blasstation übergeben und diese Blasstation ist an einem beweglichen Träger, beispielsweise einem drehbaren Blasrad angeordnet. Während des Transports des innerhalb der Blasstation befindlichen Kunststoffvorformlings wird dieser durch Beaufschlagung mit Druckluft zu einem Kunststoffbehältnis aufgeblasen bzw. expandiert. Zu diesem Zweck wird der Kunststoffvorformling mit sehr hohem Druck, beispielsweise über 40 bar beaufschlagt. Derartige Verfahren und Vorrichtungen sind z.B. aus den Druckschriften US 2006199340 und WO 2007 177241 bekannt.

Auch ist es im Stand der Technik bekannt, dass derartige Blasformen bzw. deren Träger während des Expansionsprozesses miteinander verriegelt werden. Nach der eigentlichen Expansion wird der Druck innerhalb des Behältnisses wieder verringert bzw. das Behältnis entspannt. Dabei ist dabei zu beachten, dass an einem bestimmten Punkt der Blasstation entlang ihres Transportpfades diese bereits wieder entlastet sein muss, damit sie ohne Beschädigungen wieder geöffnet werden kann.

Im Stand der Technik ist es dabei üblich, dass bei einem Prozesswinkel bzw. zu einer vorgegebenen Prozesszeit die Entlastung des Behältnisses eingeleitet wird, damit jedenfalls zu dem besagten Zeitpunkt das Behältnis vollständig entlastet ist, damit so die Blasstation gefahrlos geöffnet werden kann. Entsprechend wird der Anfangszeitpunkt, an dem mit der Entlastung des Kunststoffvorformlings begonnen wird, relativ früh angesetzt, um sicherzustellen, dass in dem besagten Zeitpunkt der Druck hinreichend entlastet ist.

Dies führt jedoch in vielen Fällen zu einer Verschwendung von Prozesszeit, da es oftmals wünschenswert wäre, diese Prozesszeit bzw. den Druck innerhalb der Behältnisse möglichst lange aufrechtzuerhalten.

Der vorliegenden Erfindung liegt daher die Aufgabe zugrunde, Verfahren zum Umformen von Kunststoffvorformlingen zu Kunststoffbehältnissen und entsprechende Blasmaschinen dahingehend zu verbessern, dass die zu Verfügung stehende Prozesszeit besser ausgenutzt werden kann. Dies wird erfindungsgemäß durch ein Verfahren und eine Vorrichtung nach den unabhängigen Ansprüchen erreicht. Vorteilhafte Ausführungsformen und Weiterbildungen sind Gegenstand der Unteransprüche.

Bei einem erfindungsgemäßen Verfahren zum Umformen von Kunststoffvorformlingen zu Kunststoffbehältnissen wird ein Kunststoffvorformling in eine Blasform eingebracht und anschließend wird die Blasform mit dem Kunststoffvorformling entlang eines vorgegebenen Transportpfades transportiert. Insbesondere während dieses Transports wird der Kunststoffvorformling mit einem gasförmigen Medium während eines vorgegebenen Zeitraums zu dessen Expansion beaufschlagt, wobei die Zufuhr des gasförmigen Mediums gesteuert erfolgt.

Weiterhin wird das Behältnis zu einem vorgegebenen Zeitpunkt t2, der insbesondere nach dem vorgegebenen Zeitraum liegt bzw. diesen abschließt, druckentlastet. Erfindungsgemäß ist der vorgegebene Zeitpunkt t2, zu dem das Behältnis druckentlastet wird, veränderbar.

Im Folgenden wird unter dem Zeitpunkt t2 derjenige Zeitpunkt verstanden, an dem das Druckentlasten des Behältnisses eingeleitet wird. Es könnte jedoch auch eine andere Definition für den besagten Zeitpunkt zugrunde gelegt werden, beispielsweise eine vorgegebene Zeitspanne nach der Öffnung eines entsprechenden Entlastungsventils.

Durch die Veränderbarkeit des vorgegebenen Zeitpunkts ist es möglich, dass die Prozesszeit, insbesondere individuell für jede Blasstation maximal verlängert wird und jeweils angepasst wird.

Vorteilhaft werden die Behältnisse entlang eines kreisförmigen Pfades transportiert, wobei beispielsweise eine Vielzahl von Blasstationen an einem Blasrad angeordnet sein können. Aus diesem Grunde kann damit auch dem Zeitpunkt t2 (sowie auch anderen für das Verfahren charakteristischen Zeitpunkten) insbesondere individuell für jede Blasstation ein bestimmter Prozesswinkel zugeordnet werden oder auch, falls der Transport nicht entlang eines kreisförmigen Pfades stattfinden sollte, ein bestimmter Streckenabschnitt. Unter dem Zeitpunkt wird damit vorteilhaft ein Zeitpunkt verstanden, der einer bestimmten Blasstation bzw. einem bestimmten Kunststoffvorformling individuell zugeordnet ist.

Der Zeitpunkt, zu dem die Entlastung eingeleitet wird, wird vorzugsweise derart eingestellt, dass die Form zu einem weiteren Zeitpunkt vollständig entlastet ist. Üblicherweise steht bereits beim Bau oder der Konstruktion einer Vorrichtung zum Umformen von Kunststoffvorformlingen zu Kunststoffbehältnissen der Zeitpunkt fest bzw. auch der Prozesswinkel, wann die Blasstation drucklos bzw. annähernd drucklos sein muss. Dieser Zeitpunkt wird festgehalten bzw. festgelegt.

Bei einem weiteren vorteilhaften Verfahren werden eine Vielzahl von Kunststoffvorformlingen und mehreren Blasstationen transportiert und vorteilhaft ist für diese Blasstationen der jeweilige Zeitpunkt t2, an dem mit der Entlastung begonnen wird, veränderbar.

Bei einem weiteren vorteilhaften Verfahren werden die Kunststoffvorformlinge in eine geöffnete Blasform eingebracht, anschließend wird die Blasstation geschlossen und besonders bevorzugt auch verriegelt. Während dieser Verfahrensschritte werden die einzelnen Blasstationen vorteilhaft bewegt und besonders vorteilhaft kontinuierlich bewegt. Nach der Expansion des Kunststoffvorformlings zu dem Kunststoffbehältnis wird vorteilhaft die Verriegelung gelöst und im Anschluss die Blasform wieder geöffnet, um das nunmehr gefertigte Kunststoffbehältnis entnehmen zu können. Der besagte Zeitpunkt ist damit auf den Transport der Kunststoffvorformlinge bezogen, so dass wie oben erwähnt, alternativ auch von einem vorgegebenen Prozesswinkel gesprochen werden kann. Bevorzugt handelt es sich bei dem Verfahren um ein sog. Streckblasverfahren, d.h., die Kunststoffvorformlinge werden nicht nur durch Beaufschlagung mit einem gasförmigen Medium expandiert sondern auch (insbesondere mittels einer Reckstange) in ihrer Längsrichtung gedehnt.

Bei einem weiteren vorteilhaften Verfahren wird zu dem vorgegebenen Zeitpunkt t2 ein Signal an ein Entlastungsventil ausgegeben, wodurch der Druckentlastungsvorgang eingeleitet wird. Vorteilhaft wird das Signal durch eine Steuerungseinrichtung an das besagte Entlastungsventil ausgegeben.

Bei einem weiteren vorteilhaften Verfahren erfolgt eine Festlegung des Zeitpunkts, an dem die Druckentlastung erfolgt oder eingeleitet wird in Abhängigkeit von einem zweiten späteren Zeitpunkt, an dem die Blasform druckentlastet ist bzw. druckentlastet sein muss. Dieser genannte Zeitpunkt lässt sich entsprechend als Prozesswinkel(differenz) formulieren.

Bei einem weiteren vorteilhaften Verfahren wird ein Druck des gasförmigen Mediums innerhalb des Behältnisses bestimmt. Vorteilhaft wird der Druck des gasförmigen Mediums innerhalb des Behältnisses kontinuierlich - zumindest kontinuierlich während des Expansionsprozesses und/oder des anschließenden Entlastungsprozesses des Behältnisses - bestimmt.

Dabei ist es möglich, dass eine Druckmesseinrichtung in das Behältnis eingeführt wird, bevorzugt wird jedoch der Innendruck des Behältnisses außerhalb des Behältnisses bestimmt.

Bei einem weiteren vorteilhaften Verfahren wird ein Zeitpunkt t3 bestimmt, zu dem ein Innendruck des Behältnisses einen vorgegebenen Druckgrenzwert unterschreitet. Nach Beginn der Entlastung wird der Druck innerhalb des Behältnisses absinken. Als Druckgrenzwert kommt beispielsweise ein Druckwert von 0,5 bar in Betracht, d. h. ein Druck, ab dem die Blasform nunmehr geöffnet werden kann und welcher als druckentlastet angesehen werden kann. Vorteilhaft liegt dieser Druckgrenzwert zwischen 0,2bar und 4bar, bevorzugt zwischen 0,2bar und 2bar und besonders bevorzugt zwischen 0,3bar und 1 bar. Bei diesem Druck handelt es sich bevorzugt um einen Druck gegenüber dem atmosphärischen Druck.

Damit ist vorteilhaft dieser besagte Grenzwert auch charakteristisch für den Zeitpunkt an dem die Blasform druckentlastet ist. Damit wird vorteilhaft die Zeit zwischen dem Zeitpunkt, an dem mit dem Druckentlasten begonnen wird und dem Zeitpunkt, an dem der Innendruck des Behältnisses den Grenzwert unterschritten hat, gemessen. Der Zeitpunkt, an dem mit dem Entlasten begonnen wird kann beispielsweise gleichgesetzt werden mit dem Zeitpunkt, zu dem ein elektrisches Signal an das Entlastungsventil ausgegeben wurde, welches eine Öffnung des Entlastungsventils bewirkt. Vorteilhaft wird eine Zeitdifferenz zwischen den beiden besagten Zeitpunkten, d. h. dem Zeitpunkt, an dem der Druckgrenzwert unterschritten wird und dem Zeitpunkt, an dem das Entlastungsventil geöffnet wurde, bestimmt.

Vorteilhaft wird eine Vielzahl von derartigen Blasformen bzw. Blasstationen vorgesehen, in welche jeweils die Kunststoffvorformlinge eingebracht werden, wobei jeweils die Zeitdifferenzen zwischen den jeweiligen Zeitpunkten t3 und t2 bestimmt werden. Vorteilhaft sind die einzelnen Blasstationen jeweils an dem gleichen beweglichen Träger angeordnet.

Anstelle und/oder neben der Zeitdifferenzen können jedoch auch Prozesswinkeldifferenzen bestimmt werden. Bei einem weiteren vorteilhaften Verfahren werden die einzelnen gemessenen Zeitdifferenzen für jede einzelne Blasstation miteinander verglichen und die größte Zeitdifferenz dieser Zeitdifferenzen wird ermittelt. Vorteilhaft wird nunmehr auf Basis dieser größten Zeitdifferenz der (bevorzugt für alle Blasstationen gemeinsame) Zeitpunkt t2 (bzw. der diesem zugeordnete Prozesswinkel) bestimmt. Damit wird vorteilhaft für jede einzelne Blasstation die Zeit zwischen dem elektrischen Signal an das Entlastungsventil und dem Punkt an dem der Druck in der Flasche kleiner ist als der oben erwähnte Grenzwert gemessen, und anschließend die größte Zeitdifferenz bzw. der größte Winkel für die Ermittlung des Entlastungszeitpunkts bzw. des Entlastungswinkels bestimmt. Dabei kann dieser größere Winkel mittels des maximalen Winkels (bzw. der maximalen Zeit) zurückgerechnet werden und dann für alle Blasstationen gleichgesetzt werden.

Auf diese Weise kann automatisch der Prozesswinkel, zu dem mit der Entlastung der Behältnisse begonnen wird für alle Blasstationen optimiert werden. Es wäre jedoch auch möglich, dass die besagte Optimierung individuell für jede einzelne Blasstation vorgenommen wird und daher auch für die einzelnen Blasstationen unterschiedlich sein kann.

Bei einem weiteren vorteilhaften Verfahren ist der vorgegebene Zeitpunkt (t2) in Abhängigkeit eines zur Verfügung stehenden Prozesswinkels oder Streckenabschnitts des Transportpfades (Tp) veränderbar. Hierdurch kann die eigentliche Prozesszeit, in welcher der Kunststoffvorformling mit Druck beaufschlagt ist, optimal ausgedehnt werden.

Die vorliegende Erfindung ist weiterhin auf eine Vorrichtung zum Umformen von Kunststoffvorformlingen zu Kunststoffbehältnissen gerichtet. Diese Vorrichtung weist eine Transporteinrichtung auf, an der eine Vielzahl von Blasstationen zur Umformung der Kunststoffvorformlinge zu den Kunststoffbehältnissen angeordnet ist. Dabei transportiert die Transporteinrichtung die Blasstationen entlang eines vorgegebenen Transportpfades. Die Blasstationen weisen jeweils Blasformen auf, innerhalb derer die Kunststoffvorformlinge zu den Kunststoffbehältnissen umgeformt werden und weiterhin weisen die Blasstationen jeweils Beaufschlagungseinrichtungen auf, welche die Kunststoffvorformlinge zu deren Expansion mit einem gasförmigen Medium beaufschlagen. Weiterhin weist die Vorrichtung eine Steuerungseinrichtung auf, welche die Beaufschlagung der einzelnen Kunststoffvorformlinge mit dem gasförmigen Medium steuert und jede Blasstation weist wenigstens ein Entlastungsventil auf, welches ein Entweichen des gasförmigen Mediums aus den Kunststoffbehältnissen steuert (insbesondere zulässt oder verhindert).

Dabei leitet die Steuerungseinrichtung für jede Blasstation das Entweichen des gasförmigen Mediums zu einem vorgegebenen Zeitpunkt ein. Erfindungsgemäß ist der vorgegebene Zeitpunkt veränderbar.

Es wäre jedoch auch möglich, dass mehrere Steuerungseinrichtungen vorgesehen sind, die jeweils für die einzelnen Blasstationen das Entlasten des Kunststoffbehältnisses einleiten. Vorteilhaft ist dabei den Blasstationen jeweils ein bestimmter Zeitpunkt zum Entlasten zugeordnet. Es wäre jedoch auch möglich, dass ein bestimmter Prozesswinkel bestimmt wird, an dem jeweils der Entlastungsprozess eingeleitet wird bzw. das Entlastungsventil geöffnet wird.

Bei einer vorteilhaften Ausführungsform weist die Vorrichtung eine Druckerfassungseinrichtung zur Erfassung eines Innendrucks in den Behältnissen oder eines hierfür charakteristischen Messwerts auf. Vorteilhaft erfasst die Druckerfassungseinrichtung den Innendruck kontinuierlich oder zumindest in einem vorgegebenen Zeitraum kontinuierlich. Die Steuerungseinrichtung ist vorteilhaft derart gestaltet, dass sie feststellt, wann der besagte Druckgrenzwert erreicht ist, bzw. unterschritten wird. Vorteilhaft weist jede einzelne Behandlungsstation eine derartige Druckerfassungseinrichtung auf. Bei einer weiteren vorteilhaften Ausführungsform ist die Steuerungseinrichtung derart gestaltet, dass sie individuell die oben genannten Zeiten berechnet und besonders bevorzugt steuert die Steuerungseinrichtung die Anlage in Abhängigkeit von einem bestimmten Zeitwert oder Differenzwert.

Weitere Vorteile und Ausführungsformen ergeben sich aus den beigefügten Zeichnungen. Darin zeigen:
- Fig. 1: eine schematische Darstellung einer erfindungsgemäßen Vorrichtung;
- Fig. 2: eine Darstellung eines Druckverlaufs zur Veranschaulichung der Erfindung;
- Fig. 3: eine Darstellung einer Blasstation; und
- Fig. 4a,b: zwei Darstellung eines Ventilblocks

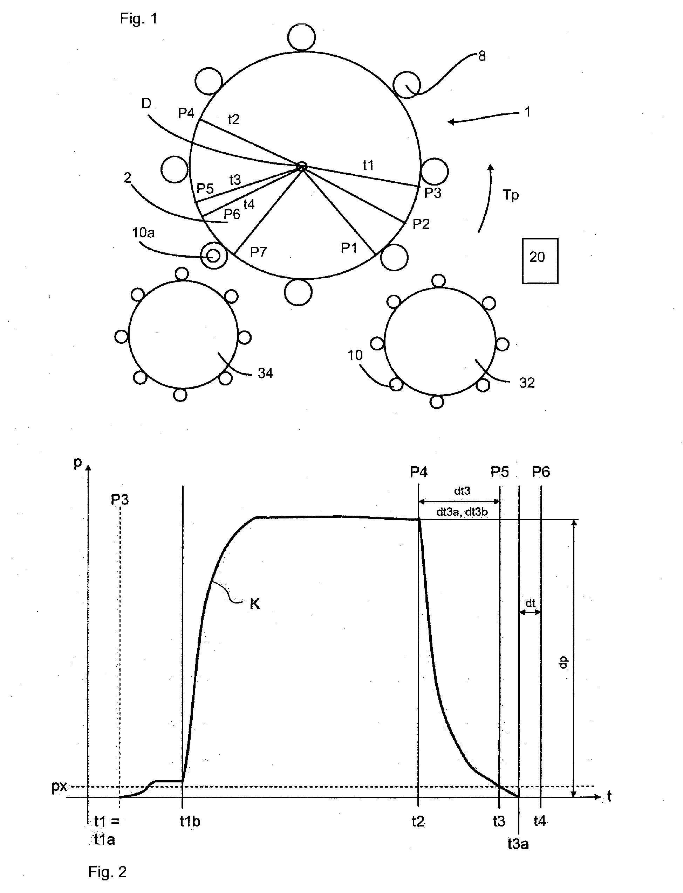

Fig. 1 zeigt eine schematische Darstellung einer erfindungsgemäßen Vorrichtung 1 zum Umformen von Kunststoffvorformlingen zu Kunststoffbehältnissen. Diese Vorrichtung 1 weist eine Zuführeinrichtung wie einen Transportstern 32 auf, welche der Vorrichtung 1 Kunststoffvorformlinge 10 zuführt. Weiterhin kann in der Transportrichtung der Kunststoffvorformlinge vor der Vorrichtung 10 noch eine Erwärmungseinrichtung zum Erwärmen der Kunststoffvorformlinge vorgesehen sein. Die Vorrichtung 1 weist einen um eine Drehachse D drehbaren Träger 2 auf, an dem eine Vielzahl von Blasstationen 8 angeordnet ist. Mittels dieser Blasstationen 8 werden die Kunststoffvorformlinge 10 jeweils zu Kunststoffbehältnissen 10a umgeformt. Die so gefertigten Kunststoffbehältnisse werden mittels eines Abführrades 34 abgeführt.

Das Bezugszeichen P1 kennzeichnet einen Übergabepunkt, an dem die Kunststoffvorformlinge an die Vorrichtung 1 bzw. eine Blasstation 8 übergeben werden. Dieser Übergabepunkt P1 ist damit eindeutig durch die Anordnung der gesamten Anlage 1 festgelegt. Das Bezugszeichen P7 bezieht sich auf einen Übergabepunkt, an dem das geblasene Behältnis an die Abführeinrichtung 34 übergeben wird. Auch dieser Übergabepunkt ist festgelegt. Den einzelnen Punkten P1 - P7 können auch (insbesondere für die einzelnen Blasstationen individuelle) Zeitpunkte zugeordnet werden. Ab einem Punkt P2 wird die Blasform geschlossen und ggfs. auch verriegelt und ab einem Punkt P3 wird mit dem Blasen der Behältnisse begonnen.

Dabei werden vorteilhaft die Kunststoffvorformlinge 10 mit unterschiedlichen Druckniveaus beaufschlagt, wie beispielsweise einem Vorblasdruck und einem Fertigblasdruck. Vorteilhaft weist die erfindungsgemäße Vorrichtung noch mehrere Ventile auf, um den Druck, insbesondere auf den genannten unterschiedlichen Druckstufen zu steuern. Eine Steuerungseinrichtung 20 dient zum Steuern der einzelnen Druckstufen.

Daneben können gleichzeitig die Kunststoffvorformlinge 10 mittels einer Reckstange entlang ihrer Längsrichtung gedehnt werden. An einem Punkt P4 bzw. zu einem diesem Punkt P4 zugeordneten Zeitpunkt t2 werden die einzelnen Behältnisse wieder entlastet bzw. das entsprechende Entlastungsventil geöffnet. Für die Herstellung der Behältnisse ist es wünschenswert, diesen Zeitpunkt t2 möglichst spät anzusetzen, damit möglichst viel Prozesszeit zur Kühlung oder Temperierung der Kunststoffbehältnisse 10a ausgenutzt werden kann. Zu dem Zeitpunkt t2 wird daher mittels einer Steuerungseinrichtung 20 (vgl. Fig. 1) ein Entlastungsventil aktiviert, um die Entlastung des Behältnisses 10a einzuleiten.

Ab dem Punkt P6, der ebenfalls bevorzugt durch die Anordnung der Anlage festgelegt ist, wird die Blasstation entriegelt und geöffnet, um das gefertigte Behältnis entnehmen zu können. Der Zeitpunkt t4 kennzeichnet entsprechend den Zeitpunkt, an dem diese Vorgänge (beispielsweise durch eine Steuerkurve) eingeleitet werden.

Der Zeitpunkt t3 kennzeichnet einen Zeitpunkt bzw. P5 den Punkt, an dem ein Innendruck in dem Behältnis unter einen vorgegebenen Grenzwert gefallen ist. Unterhalb dieses Grenzwertes ist ein Öffnen der Blasform möglich. In Fig. 1 liegt der Zeitpunkt t3 vor dem Zeitpunkt t4, insbesondere falls noch eine bestimmte Sicherheitszeitspanne berücksichtigt wird, ehe die Blasform geöffnet wird.

Den einzelnen Punkten P1 - P7 lassen sich daher auch bestimmte Prozesswinkel zuordnen, wobei beispielsweise dem Punkt P1 der Winkel 0° zugeordnet werden kann. Das Bezugszeichen Tp kennzeichnet den (hier kreisförmigen) Transportpfad, auf dem die Behältnisse 10, 10a während ihrer Expansion transportiert werden.

Fig. 2 zeigt einen Verlauf einer Druckkurve K innerhalb eines zu expandierenden Behältnisses. Man erkennt, dass zu dem Zeitpunkt t1 bzw. dem Punkt P3 mit dem Blasen des Kunststoffvorformlings begonnen wird. Zunächst wird der Kunststoffvorformling bis zu dem Zeitpunkt t1 a mit einem Vorblasdruck beaufschlagt, anschließend dieser Vorblasdruck bis zu dem Zeitpunkt t1 b aufrecht erhalten und anschließend das Behältnis ab diesem Zeitpunkt t1 b mit dem Fertigblasdruck beaufschlagt. Dieser Fertigblasdruck wird für einen vorgegebenen Zeitraum im Wesentlichen aufrecht erhalten. Das Bezugszeichen dp kennzeichnet das Druckniveau bei Beginn der Entlastung.

An dem Punkt P4 bzw. dem hierzu korrespondierenden Zeitpunkt t2 wird das Expansionsventil geöffnet und die Luft kann aus dem nunmehr fertig geblasenen Kunststoffbehältnis entweichen. Der Zeitpunkt t2 stellt damit den Zeitpunkt der Beginn einer Dauerentlastung während des Zeitraums dt3 dar. Zu dem Zeitpunkt t3 bzw. t3a ist das Behältnis druckentlastet bzw. der Druck innerhalb des Behältnisses liegt unterhalb des oben erwähnten Grenzwerts px.

Das Bezugszeichen P6 kennzeichnet denjenigen Punkt, an dem die Druckentlastung spätestens abgeschlossen sein muss, um die Blasstation sicher öffnen zu können. Das Bezugszeichen dt kennzeichnet damit diejenige Zeitspanne die durch das erfindungsgemäße Verfahren für die Prozesszeit gewonnen werden kann. Der Zeitpunkt t4 ist festgelegt und der Zeitpunkt t3 wird durch Druckmessung bestimmt. Außerdem ist der Zeitpunkt t2 bekannt, an dem das Entlastungsventil geöffnet wurde.

Daher kann für jede einzelne Blasstation die Zeitspanne dt3a, dt3b...(die Indizes a,b.. stehen für die einzelnen Blasstationen) berechnet werden, welche zwischen dem Öffnen des Entlastungsventils einerseits und dem Absinken des Drucks unter den vorgenannten Grenzwert andererseits liegt. Im weiteren kann des Maximum dt3max dieser einzelnen ermittelten Zeitspannen dt3a, dt3b... ermittelt werden und dieser maximale Zeitwert dt3max kann ausgehend von dem Zeitpunkt t4, an dem das Behältnis in jedem Fall entlastet sein muss, zurückgerechnet werden, um so den für alle Blasstationen gleichen Zeitpunkt t2 zu ermitteln. Dies bedeutet jedoch, dass zumindest für die übrigen Blasstationen (für welche die Zeitspanne nicht den oben erwähnten Maximalwert annimmt) die Prozesszeit besser als im Stand der Technik genutzt werden kann. Auf diese Weise ist eine automatische Optimierung der Prozesswinkel möglich.

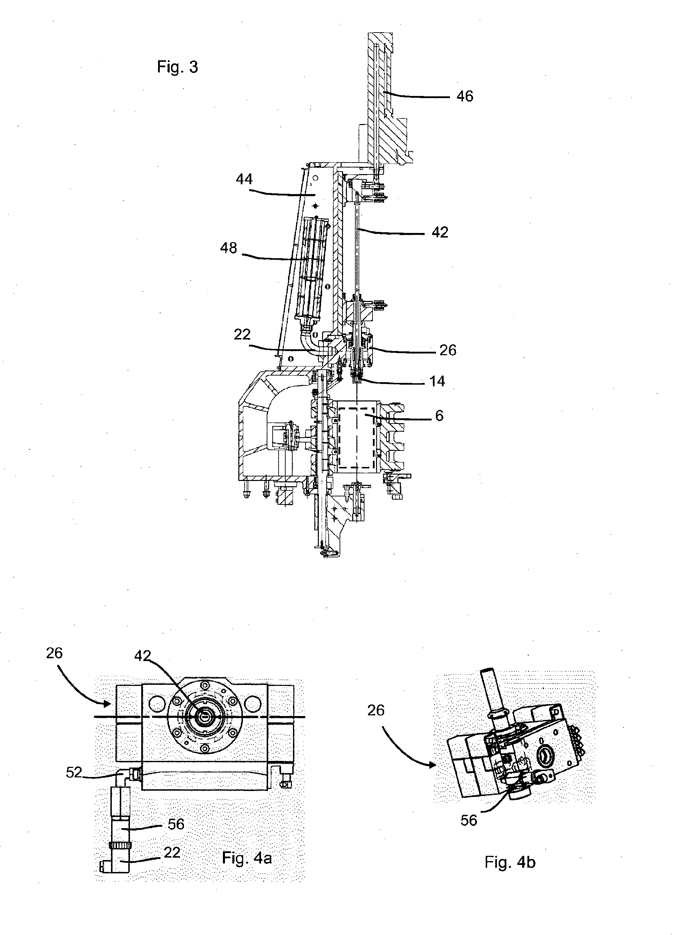

Fig. 3 zeigt eine schematische Darstellung einer Blasstation 8. Dieser Blasstation weist dabei eine demontierbar angeordnete Blasform 6 auf, die hier nur gestrichelt dargestellt ist, da sie von Blasformträgern gehalten und damit nicht unmittelbar sichtbar ist. Das Bezugszeichen 14 bezieht sich auf eine Beaufschlagungseinrichtung wie eine Blasdüse, welche die Kunststoffvorformlinge mit Blasluft beaufschlagt. An einem Träger 44 ist eine Antriebseinrichtung 46 zum Bewegen einer Reckstange 42 angeordnet. Das Bezugszeichen 26 bezieht sich in seiner Gesamtheit auf einen Ventilblock. Innerhalb dieses Ventilblocks ist vorteilhaft eine Vielzahl von Ventilen angeordnet, welche die Beaufschlagung der Kunststoffvorformlinge mit den einzelnen Druckniveaus steuert. Das Bezugszeichen 48 kennzeichnet einen Schalldämpfer, der innerhalb des Trägers 44 angeordnet sein kann.

Die Fig. 4a und 4b zeigen zwei Darstellungen eines Ventilblocks. Dabei bezieht sich das Bezugszeichen 52 auf eine Abführleitung, über welche die Blasluft aus dem Behältnis entlastet werden kann. Das Bezugszeichen 56 kennzeichnet eine Druckmesseinrichtung und das Bezugszeichen 22 das Entlastungsventil.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Vorrichtung
- 2: Transporteinrichtung
- 6: Blasform
- 8: Blasstation
- 10: Kunststoffvorformling
- 10a: Kunststoffbehältnisse
- 14: Beaufschlagungseinrichtung, Blasdüse
- 20: Steuerungseinrichtung
- 22: Entlastungsventil
- 26: Ventilblock
- 32: Zuführeinrichtung
- 34: Abführeinrichtung
- 42: Reckstange
- 44: Träger
- 46: Antrieb
- 48: Schalldämpfer
- 52: Abführleitung
- 56: Druckmesseinrichtung

- K: Kurve
- P1: Übergabepunkt der Kunststoffvorformlinge 10 an Vorrichtung 1
- P2: Punkt ab dem Blasform geschlossen wird
- P3 (t1): Punkt (Zeitpunkt) ab dem mit Blasvorgang begonnen wird
- P4 (t2): Punkt (Zeitpunkt) ab dem Entlastung eingeleitet wird
- P5 (t3): Punkt (Zeitpunkt) bei dem Innendruck unter Grenzwert gesunken
- P6 (t4): Punkt (Zeitpunkt) des Öffnen und Entriegeln der Blasform
- P7: Übergabepunkt der Kunststoffbehältnisse 10a an Abführeinrichtung
- dt3: Zeitraum der Druckentlastung
- dt3a,dt3b...: Zeitraum der Druckentlastung für die einzelnen Blasstationen
- dt3max: Maximum der einzelnen Zeitspannen dt3a, dt3b...
- dt: für Prozess gewinnbare Zeitspanne
- Tp: Transportpfad der Kunststoffbehältnisse
- t1 a, t1 b: Zeitpunkte
- D: Drehachse
- dp: Druckniveau bei Beginn der Entlastung
- px: Grenzdruckniveau unterhalb dessen entriegelt werden kann

## Patentansprüche

1. Verfahren zum Umformen von Kunststoffvorformlingen (10) zu Kunststoffbehältnissen (10a) mit den Schritten:
- Einbringen eines Kunststoffvorformlings (10) in eine Blasform (6);
- Transportieren der Blasform (6) mit dem Kunststoffvorformling (10) entlang eines vorgegebenen Transportpfades (Tp);
- Beaufschlagen des Kunststoffvorformlings (10) mit einem gasförmigen Medium während eines vorgegebenen Zeitraums zu dessen Expansion , wobei die Zufuhr des gasförmigen Mediums gesteuert erfolgt;
- Druckentlasten des Behältnisses (10a) zu einem vorgegebenen Zeitpunkt t2; **dadurch gekennzeichnet, dass**
der vorgegebene Zeitpunkt t2 veränderbar ist, wobei der vorgegebene Zeitpunkt (t2) in Abhängigkeit eines zur Verfügung stehenden Prozesswinkels oder Streckenabschnitts des Transportpfades (Tp) veränderbar ist.

2. Verfahren nach Anspruch 1,
**dadurch gekennzeichnet, dass**
zu dem vorgegebenen Zeitpunkt (t2) ein Signal an ein Entlastungsventil (22) ausgegeben wird, wodurch der Druckentlastungsvorgang eingeleitet wird.

3. Verfahren nach wenigstens einem der vorangegangenen Ansprüche,
**dadurch gekennzeichnet, dass**
eine Festlegung des Zeitpunkts (t2), an dem die Druckentlastung in Abhängigkeit von einem zweiten, späteren Zeitpunkt (t3) erfolgt, an dem die Blasform (6) vollständig druckentlastet bzw. mindestens unter das Grenzdruckniveau px entlastet ist, bei dem ein Entriegeln des Formtägers problemlos möglich ist.

4. Verfahren nach wenigstens einem der vorangegangenen Ansprüche,
**dadurch gekennzeichnet, dass**
ein Druck des gasförmigen Mediums innerhalb des Behältnisses (10,10a) bestimmt wird.

5. Verfahren nach Anspruch 4,
**dadurch gekennzeichnet, dass**
ein Zeitpunkt (t3) bestimmt wird, zu dem ein Druck innerhalb des Behältnisses (10a) einen vorgegebenen Druckgrenzwert unterschreitet.

6. Verfahren nach Anspruch 5,
**dadurch gekennzeichnet, dass**
eine Zeitdifferenz (dt3a) zwischen dem Zeitpunkt (t3) und dem Zeitpunkt (t2) bestimmt wird.

7. Verfahren nach Anspruch 6,
**dadurch gekennzeichnet, dass**
eine Vielzahl von Blasformen (6) vorgesehen wird, in welche jeweils die Kunststoffvorformlinge eingebracht werden und die Zeitdifferenzen (dt3a, td3b ...) zwischen den jeweiligen Zeitpunkten (t3) und (t2) bestimmt werden.

8. Verfahren nach Anspruch 7,
**dadurch gekennzeichnet, dass**
die Zeitdifferenzen (dt3a, dt3b ...) miteinander verglichen werden und die größte Zeitdifferenz (dt3max) dieser Zeitdifferenzen (dt3a, dt3b...) ermittelt wird.

9. Verfahren nach Anspruch 8,
**dadurch gekennzeichnet, dass**
auf Basis der größten Zeitdifferenz (dt3max) der Zeitpunkt (t2) bestimmt wird.

10. Vorrichtung (1) zum Umformen von Kunststoffvorformlingen (10) zu Kunststoffbehältnissen (10a) mit einer Transporteinrichtung (2), an der eine Vielzahl von Blasstationen (8) zum Umformen der Kunststoffvorformlinge (10) zu den Kunststoffbehältnissen (10a) angeordnet ist, wobei die Transporteinrichtung (2) die Blasstationen (8) entlang eines vorgegebenen Transportpfades (Tp) transportiert, wobei die Blasstationen (8) jeweils Blasformen (6) aufweisen, innerhalb derer die Kunststoffvorformlinge (10) zu den Kunststoffbehältnissen (10a) umgeformt werden und wobei die Blasstationen (8) jeweils Beaufschlagungseinrichtungen (14) aufweisen, welche die Kunststoffvorformlinge (10) zu deren Expansion mit einem gasförmigen Medium beaufschlagen, wobei die Vorrichtung (1) eine Steuerungseinrichtung (20) aufweist, welche die Beaufschlagung der einzelnen Kunststoffvorformlinge (10) mit dem gasförmigen Medium steuert und jede Blasstation (8) wenigstens ein Entlastungsventil (22) aufweist, welche Entweichen des gasförmigen Mediums aus den Kunststoffbehältnissen (10a) steuert, wobei die Steuerungseinrichtung (20) für jede Blasstation (8) das Entweichen des gasförmigen Mediums zu einem vorgegebenen Zeitpunkt (t2) einleitet,
**dadurch gekennzeichnet, dass**
der vorgegebene Zeitpunkt (t2) veränderbar ist, wobei der vorgegebene Zeitpunkt (t2) in Abhängigkeit eines zur Verfügung stehenden Prozesswinkels oder Streckenabschnitts des Transportpfades (Tp) veränderbar ist.

11. Vorrichtung (1) nach Anspruch 10,
**dadurch gekennzeichnet, dass**
die Vorrichtung (1) eine Druckmesseinrichtung (56) zur Erfassung eines Innendrucks in den Behältnissen (10a) oder eines hierfür charakteristischen Messwerts aufweist.

## Claims

1. A method of shaping plastics material pre-forms (10) into plastics material containers (10a) with the steps:
- introducing a plastics material pre-form (10) into a blow mould (6);
- conveying the blow mould (6) with the plastics material pre-form (10) along a pre-set conveying path (Tp);
- acting upon the plastics material pre-form (10) with a gaseous medium during a pre-set period of time for the expansion thereof, wherein the supply of the gaseous medium is carried out in a controlled manner;
- releasing the container (10a) from pressure at a pre-set point in time t2;
**characterized in that**
the pre-set point in time t2 is variable, the pre-set point in time (t2) being variable in dependence of the available process angle or the path section of the conveying path (Tp).

2. A method according to claim 1, **characterized in that** a signal is sent to a release valve (22) at the pre-set point in time (t2), as a result of which the pressure release procedure is initiated.

3. A method according to at least one of the preceding claims, **characterized in that** a fixing of the point in time (t2) takes place at which the pressure release takes place in a manner dependent upon a second subsequent point in time (t3) at which the blow mould (6) is released from pressure completely or is released respectively at least below the threshold pressure level px, at which unlocking of the mould carrier is possible without difficulty.

4. A method according to at least one of the preceding claims, **characterized in that** a pressure of the gaseous medium is determined inside the container (10, 10a).

5. A method according to claim 4, **characterized in that** a point in time (t3) is determined at which a pressure inside the container (10a) drops below a pre-set pressure threshold.

6. A method according to claim 5, **characterized in that** a time difference (dt3a) is determined between the point in time (t3) and the point in time (t2).

7. A method according to claim 6, **characterized in that** a plurality of blow moulds (6) are provided, into which the plastics material pre-forms are introduced in each case and the time differences (dt3a, td3b ...) between the respective moments in time (t3) and (t2) are determined.

8. A method according to claim 7, **characterized in that** the time differences (dt3a, dt3b ...) are compared with each other and the greatest time difference (dt3max) of these time differences (dt3a, dt3b ...) is determined.

9. A method according to claim 8, **characterized in that** the point in time (t2) is determined on the basis of the greatest time difference (dt3max).

10. An apparatus (1) for the shaping of plastics material pre-forms (10) into plastics material containers (10a) with a conveying device (2) on which a plurality of blow-moulding stations (8) for shaping the plastics material pre-forms (10) into the plastics material containers (10a) are arranged, wherein the conveying device (2) conveys the blow-moulding stations (8) along a pre-set conveying path (Tp), wherein the blow-moulding stations (8) have in each case blow moulds (6) inside which the plastics material pre-forms (10) are shaped into the plastics material containers (10a) and wherein the blow-moulding stations (8) have in each case acting upon devices (14) which act upon the plastics material pre-forms (10) with a gaseous medium for their expansion, wherein the apparatus (1) has a control device (20) which controls the stressing of the individual plastics material pre-forms (10) with the gaseous medium and each blow-moulding station (8) has at least one release valve (22) which controls the escape of the gaseous medium out of the plastics material containers (10a), wherein the control device (20) for each blow-moulding station (8) initiates the escape of the gaseous medium at a pre-set point in time (t2), **characterized in that** the pre-set point in time (t2) is variable, the pre-set point in time (t2) being variable in dependence of the available process angle or the path section of the conveying path (Tp).

11. An apparatus (1) according to claim 10, **characterized in that** the apparatus (1) has a pressure measurement instrument (56) for detecting an internal pressure in the containers (10a) or a measurement value characteristic thereof.

## Revendications

1. Procédé de façonnage d'ébauches en matière plastique (10) pour obtenir des récipients en matière plastique (10a), ce procédé comprenant les étapes suivantes :
- introduire une ébauche en matière plastique (10) dans un moule de soufflage (6) ;
- transporter le moule de soufflage (6) avec l'ébauche en matière plastique (10) le long d'un trajet de transport (Tp) prédéfini ;
- appliquer un milieu gazeux sur l'ébauche en matière plastique (10) pendant un laps de temps prédéfini jusqu'à l'expansion de ce dernier, l'amenée du milieu gazeux se produisant de manière commandée ;
- décompresser le récipient (10a) jusqu'à un moment (t2) prédéfini ;
**caractérisé en ce que**
le moment (t2) prédéfini est variable, le moment (t2) prédéfini variant en fonction d'un angle de processus disponible ou d'un tronçon du trajet de transport (Tp).

2. Procédé selon la revendication 1, **caractérisé en ce qu'**
au moment (t2) prédéfini, un signal est délivré à une soupape de décharge (22), la procédure de décompression étant déclenchée.

3. Procédé selon au moins l'une des revendications précédentes, **caractérisé en ce qu'**
une fixation du moment (t2), auquel la décompression a lieu en fonction d'un second moment (t3) ultérieur, auquel le moule de soufflage (6) est entièrement décompressé ou respectivement au moins décompressé au-dessous du niveau de pression limite px, pour lequel un déverrouillage du support de moule est possible sans aucune difficulté, est effectuée.

4. Procédé selon au moins l'une des revendications précédentes, **caractérisé en ce qu'**
une pression du milieu gazeux à l'intérieur du récipient (10, 10a) est définie.

5. Procédé selon la revendication 4, **caractérisé en ce qu'**
un moment (t3) est défini, auquel une pression à l'intérieur du récipient (10a) devient inférieure à une valeur de pression limite prédéfinie.

6. Procédé selon la revendication 5, **caractérisé en ce qu'**
une différence de temps (dt3a) est définie entre le moment (t3) et le moment (t2).

7. Procédé selon la revendication 6, **caractérisé en ce qu'**
une pluralité de moules de soufflage (6) sont prévus, dans lesquels respectivement les ébauches en matière plastique sont introduites et les différences de temps (dt3a, dt3b...) entre les moments (t3) et (t2) respectifs sont définies.

8. Procédé selon la revendication 7, **caractérisé en ce que**
les différences de temps (dt3a, dt3b...) sont comparées les unes aux autres et la plus grande différence de temps (dt3max) de ces différences de temps (dt3a, dt3b...) est déterminée.

9. Procédé selon la revendication 8, **caractérisé en ce que**
le moment (t2) est défini sur la base de la plus grande différence de temps (dt3max).

10. Dispositif (1) permettant de façonner des ébauches en matière plastique (10) pour obtenir des récipients en matière plastique (10a), pourvu d'un dispositif de transport (2) sur lequel sont disposées une pluralité de stations de soufflage (8) destinées à façonner les ébauches en matière plastique (10) pour obtenir les récipients en matière plastique (10a), le dispositif de transport (2) transportant les stations de soufflage (8) le long d'un trajet de transport (Tp) prédéfini, les stations de soufflage (8) comprenant respectivement des moules de soufflage (6) à l'intérieur desquels les ébauches en matière plastique (10) sont façonnées pour obtenir les récipients en matière plastique (10a), et les stations de soufflage (8) comprenant respectivement des appareils d'application (14), lesquels appliquent un milieu gazeux sur les ébauches en matière plastique (10) jusqu'à l'expansion de ces derniers, le dispositif (1) comprenant un appareil de commande (20), lequel commande l'application du milieu gazeux sur les différentes ébauches en matière plastique (10) et chaque station de soufflage (8) comprend au moins une soupape de décharge (22), laquelle commande l'échappement du milieu gazeux des récipients en matière plastique (10a), l'appareil de commande (20) pour chaque station de soufflage (8) déclenchant l'échappement du milieu gazeux à un moment (t2) prédéfini,
**caractérisé en ce que**
le moment (t2) prédéfini est variable, le moment (t2) prédéfini variant en fonction d'un angle de processus disponible ou d'un tronçon du trajet de transport (Tp).

11. Dispositif (1) selon la revendication 10, **caractérisé en ce que**
le dispositif (1) comprend un appareil de mesure (56) destiné à détecter une pression intérieure dans les récipients (10a) ou une valeur de mesure caractéristique de cette dernière.
